# EUROPÄISCHE PATENTSCHRIFT

(11) **EP 3 347 596 B1**
(45) Veröffentlichungstag und Bekanntmachung des Hinweises auf die Patenterteilung: **22.05.2019**
(21) Anmeldenummer: 16741621.3
(22) Anmeldetag: 20.07.2016
(51) Int. Cl.: F04B 45/053, F04B 43/00

(54) **LADER EINER BRENNKRAFTMASCHINE**
SUPERCHARGER OF AN INTERNAL COMBUSTION ENGINE
COMPRESSEUR D'UN MOTEUR À COMBUSTION INTERNE

(30) Priorität: 10.09.2015 DE 102015217340
(43) Veröffentlichungstag der Anmeldung: 18.07.2018
(73) Patentinhaber: Robert Bosch GmbH, 70442 Stuttgart (DE)
(72) Erfinder: BAEUERLE, Michael, 71735 Eberdingen (DE); NAU, Michael, 72175 Dornhan/Aischfeld (DE)
(86) Internationale Anmeldenummer: PCT/EP2016/067278
(87) Internationale Veröffentlichungsnummer: WO 2017/041949

(56) Entgegenhaltungen:
- EP-A1- 0 128 398
- EP-A1- 2 846 019
- DE-A1- 3 131 805
- DE-B- 1 003 503
- FR-A- 1 031 061
- FR-A1- 2 444 819

## Beschreibung

### Stand der Technik

Die vorliegende Erfindung betrifft einen Lader zur Aufladung einer Brennkraftmaschine mit einem durch eine Membran gasdicht geteilten Laderraum, wie z.B. aus dem Dokument EP 2 846 019 A1 bekannt.

Lader sind aus dem Stand der Technik in unterschiedlichen Ausgestaltungen bekannt. Beispielsweise sind Abgasturbolader bekannt, bei denen mittels eines Verdichters Ladeluft einer Brennkraftmaschine verdichtet wird. Der Antrieb des Verdichters erfolgt dabei mittels Abgasen der Brennkraftmaschine. Alternativ sind auch elektrische Lader bekannt, bei denen ein Antrieb des Verdichters mittels eines Elektromotors erfolgt. Insbesondere Abgasturbolader sind jedoch bei kleinen Drehzahlen relativ träge. Elektrische Lader sind relativ teuer und benötigen zusätzliche elektrische Energie zum Betrieb. Am Markt herrscht jedoch ein Bedürfnis, auch kleinere Brennkraftmaschinen, mit einem oder zwei Zylindern, mit Frischluft aufzuladen, um die bekannten Vorteile hinsichtlich Verbrauch und Drehmoment zu erhalten. Derartige kleine Brennkraftmaschinen benötigen jedoch insbesondere einen kostengünstigen und robusten Lader. Offenbarung der Erfindung

Der erfindungsgemäße Lader einer Brennkraftmaschine mit den Merkmalen des Anspruchs 1 weist dem gegenüber den Vorteil einer sehr kostengünstigen Herstellung und eines sehr einfachen Aufbaues auf. Darüber hinaus ist der erfindungsgemäße Lader sehr robust und insbesondere für einen Einsatz in kleinen Brennkraftmaschinen geeignet. Weiterhin kann erfindungsgemäß eine sehr hohe Dynamik des Laders erreicht werden, da ein zyklus-synchroner Ladedruckaufbau möglich ist. Dabei weist der erfindungsgemäße Lader ein hohes Aufladepotential auf. Im Vergleich mit Abgasturboladern weist der erfindungsgemäße Lader ferner den Vorteil auf, dass keine Erhöhung eines Abgasgegendruckes auftritt und somit ein sehr guter Systemwirkungsgrad erreichbar ist. Dabei weist der erfindungsgemäße Lader ferner auch nur geringe mechanische Reibungsverluste auf. Dies wird erfindungsgemäß dadurch erreicht, dass der Lader zur Aufladung einen Laderraum und eine im Laderraum angeordnete Membran aufweist. Die Membran unterteilt den Laderraum in einen Ansaugraum und einen Abgasraum, welche durch die Membran gasdicht voneinander getrennt sind. Am Ansaugraum ist ein Einlassventil und ein Auslassventil für Frischluft angeordnet. Der Abgasraum ist mit einer Abgasleitung verbunden. Ferner ist ein elektrisch betätigbarer Aktuator vorgesehen, welcher mit der Membran im Laderraum verbunden ist. Der elektrische Aktuator ändert dabei eine Resonanzfrequenz der Membran. Hierdurch kann die Resonanzfrequenz der Membran an die jeweilig vorhandenen Betriebszustände der Brennkraftmaschine angepasst werden, so dass eine optimale Versorgung der Brennkraftmaschine mit Frischluft möglich ist.

Die Unteransprüche zeigen bevorzugte Weiterbildungen der Erfindung.

Vorzugsweise umfasst der Aktuator ein elektrisch betätigbares Elektrofederelement, dessen Federsteifigkeit veränderbar ist. Erfindungsgemäß wird hierbei unter einem Elektrofederelement ein elektrisch beeinflussbares Federsystem verstanden. Das elektrisch beeinflussbare Federsystem umfasst vorzugsweise eine Membranfeder und eine parallel geschaltete Permanentmagnetfeder oder eine Membranfeder und eine parallel geschaltete Elektromagnetfeder. Dadurch kann auf einfache und sichere Weise eine Resonanzfrequenz der Membran geändert werden.

Erfindungsgemäß wird somit die Resonanzfrequenz der Membran geändert, um die Resonanzfrequenz der Membran einem Zustand einer Brennkraftmaschine nachzuführen. Besonders bevorzugt wird die Resonanzfrequenz der Membran dabei dem Brennzyklus der Brennkraftmaschine nachgeführt. Die Nachführung der Resonanzfrequenz der Membran erfolgt dabei vorzugsweise derart, dass die Membran im Resonanzpunkt oder nahe dem Resonanzpunkt, vorzugsweise in einem Bereich von ± 20%, insbesondere ± 10%, des Resonanzpunkts schwingt.

Da sich die Resonanzfrequenz der Membran mit den jeweiligen Betriebsbedingungen der Brennkraftmaschine ändert, ermöglicht vorzugsweise eine Steuereinheit eine gezielte Änderung der Resonanzfrequenz der Membran, um diese möglichst nahe ihrer Resonanzfrequenz schwingen zu lassen. Hierbei kann dann eine Energie- bzw. Leistungsaufnahme am oder nahe dem Resonanzpunkt der Membran maximal sein. Da eine Resonanzfrequenz eines Feder-Masse-Schwingers proportional zu einer Wurzel eines Quotienten einer Federkonstante zu einer schwingenden Masse ist (D/m)^{0,5}, wird, da eine Masse des erfindungsgemäßen, die Membran umfassenden Schwingsystems konstant ist, eine Steifigkeit des Elektrofederelements verändert.

Besonders bevorzugt umfasst das Elektrofederelement einen Anker und wenigstens eine Spule, wobei der Anker mit der Membran verbunden ist. Durch Bestromung der Spule kann somit ein Bewegungsverhalten des Ankers beeinflusst werden, wodurch eine Steifigkeit des Elektrofederelements verändert werden kann. Je höher der Strom, umso höher ist die Federwirkung. In den beiden Totpunkten der Membran bzw. des Ankers steigt die Rückholkraft, entsprechend einer höheren Federsteifigkeit. Damit steigt die Resonanzfrequenz mit steigender Bestromung.

Besonders bevorzugt umfasst das Elektrofederelement ein ortsfestes Permanentmagnetelement, insbesondere eine Permanentmagnethülse, und ein in einer Axialrichtung des Aktuators verschiebbares Kurzschlusselement, insbesondere eine Kurzschlusshülse. Das Kurzschlusselement dient dabei zur Änderung eines Magnetflusses, indem eine Position des Kurzschlusselements relativ zum Permanentmagnetelement des Elektrofederelements verändert wird. Somit wird bei einer Bestromung der Spule eine Position des Kurzschlusselements verändert, so dass sich eine Bewegungsfähigkeit eines Ankers relativ zum Kurzschlusselement ändert, da ein Magnetfluss durch den Anker geändert ist. Somit kann ein unterschiedliches Schwingungsverhalten der mit dem Anker verbundenen Membran erreicht werden. Dieser Aufbau ist dabei besonders einfach und kostengünstig und insbesondere wartungsarm.

Bevorzugt verschiebt der Aktuator das Kurzschlusselement nur zwischen einer ersten und einer zweiten Extremposition. Dadurch kann eine sehr einfache, kostengünstige und robuste Steuerung des Aktuators erreicht werden.

Weiter bevorzugt erfolgt im Betrieb eine Dauerbestromung der Spule des Aktuators. Dies ermöglicht ebenfalls eine einfache Steuerung des Aktuators. Eine Positionsänderung des Kurzschlusselements erfolgt dabei vorzugsweise durch eine Änderung einer Stärke einer Bestromung des Aktuators.

Gemäß einer alternativen Ausgestaltung der vorliegenden Erfindung ist die Steuereinheit eingerichtet, die Spule zyklisch zu Bestromen. Das zyklische Bestromen folgt dabei besonders bevorzugt einem zyklischen Brennvorgang der Brennkraftmaschine. Dadurch kann das Schwingungsverhalten der Membran steifer oder elastischer sein und somit jeweils ein anderes Schwingungsverhalten gezielt eingestellt werden. Dabei wird die zyklische Bestromung derart gewählt, dass das Schwingungsverhalten möglichst nahe der Resonanzfrequenz zum jetzigen Betriebszeitpunkt der Brennkraftmaschine ist.

Gemäß einer weiteren bevorzugten Ausgestaltung der Erfindung ist die Steuereinheit eingerichtet, die Spule des Elektrofederelements konstant zu bestromen und der Konstantbestromung eine zyklische Bestromung zu überlagern. Dadurch kann eine besonders genaue Anpassung der Resonanzfrequenz der Membran an die jeweils in der Brennkraftmaschine herrschenden Betriebszustände anzupassen. Hierdurch kann durch einen Dauerbestromungsanteil die Resonanzfrequenz möglichst dicht an die Anregungsfrequenz aus dem Abgastrakt herangeführt werden, während gleichzeitig der zyklussynchrone Stromanteil (überlagerte Gleichstrompulse) das System zusätzlich anregt, um die Amplitude und damit die Pumpwirkung der Membran und damit den Ladedruck weiter zu steigern.

Vorzugsweise ist die Steuereinheit eingerichtet, die Spule synchron zu einem Brennkraftmaschinenzyklus zu bestromen, um eine Schwingungsamplitude der Membran ohne Beeinflussung der Resonanzfrequenz zu ändern, insbesondere zu erhöhen. Hierdurch wird elektrische Energie nicht zur Steuerung sondern zur Aufladung verwendet (Membranpumpe mit Elektroantrieb).

Weiter bevorzugt ist die Steuereinheit eingerichtet, den Aktuator derart zu betätigen, dass die Bestromung der Spule, basierend auf einer Zündfrequenz der Brennkraftmaschine erfolgt, oder möglichst der Zündfrequenz der Brennkraftmaschine entspricht. Hierdurch kann die Membran mit zunehmender Zündfrequenz eine zunehmende Steifigkeit aufweisen und so an die sich ändernden Betriebsbedingungen der Brennkraftmaschine angepasst werden. In einer ersten Näherung ist ein dem Aktuator zugeführter Strom dabei proportional einem Quadrat einer Drehzahl der Brennkraftmaschine und der Masse des Schwingungsverhaltens.

Weiter bevorzugt ist die Steuereinheit eingerichtet, den Aktuator derart zu betätigen, dass die Bestromung der Spule, basierend auf einer Drehzahl der Brennkraftmaschine, erfolgt. Somit wird die Resonanzfrequenz in Abhängigkeit der Drehzahl der Brennkraftmaschine ermittelt, so dass eine sehr einfache Steuerung des Aktuators möglich ist.

Für eine möglichst kostengünstige Ausgestaltung des Laders sind vorzugsweise das Einlassventil und/oder das Auslassventil für die Frischluft als Rückschlagventile ausgebildet.

Für eine verbesserte Robustheit ist die Membran vorzugsweise als Edelstahlmembran vorgesehen. Dadurch können auch hohe Abgastemperaturen ohne Beschädigung des erfindungsgemäßen Laders ermöglicht werden.

Zur Erfassung einer Drehzahl der Brennkraftmaschine werden Signale eines üblicherweise sowieso vorhandenen Kurbelwellenwinkelsensors vorzugsweise verwendet.

Besonders bevorzugt umfasst das Elektrofederelement einen elektrischen Schwingkreis mit einer Spule und einem Kondensator (LC-Schwingkreis). Der LC-Schwingkreis weist vorzugsweise eine variable Kapazität des Kondensators und/oder eine variable Induktivität der Spule auf. Besonders bevorzugt sind hierbei mehrere diskret schaltbare Kondensatoren und/oder unterschiedlich schaltbare Spulenabgriffe an der Spule vorgesehen. Bevorzugt wird eine Resonanzfrequenz des LC-Schwingkreises dabei nahe einer Zündfrequenz der Brennkraftmaschine nachgeführt. Insbesondere kann mittels des LC-Schwingkreises eine phasensynchrone Bestromung des Elektrofederelements erfolgen. Eine Bewegungsphase der Membran kann entsprechend einer Stromrichtung z.B. durch pulsweitenmodulierte Gleichstrompulse verstärkt werden. Alternativ können auch gleichsinnige Wechselstrompulse verwendet werden. Eine Synchronisierung der zyklischen elektrischen Unterstützung kann beispielsweise mittels Stromsensierung und/oder mittels Ankerhubsensierung und/oder basierend auf einem Kurbelwellenwinkel erfolgen. Da üblicherweise ein Kurbelwinkel in einer Steuereinheit einer Brennkraftmaschine ohnehin genau bekannt ist, ist vorzugsweise die Steuerung des Laders in die Steuerung der Brennkraftmaschine integriert. Somit kann eine Unterstützung und eine Energieaufnahme der Membran durch die Druckwellen im Abgassystem gezielt verbessert werden, da eine Resonanzfrequenz der Membran möglichst der Zündfrequenz der Brennkraftmaschine nachgeführt wird. Somit wird nur eine geringe elektrische Zusatzenergie benötigt.

Ferner betrifft die vorliegende Erfindung eine Brennkraftmaschine, insbesondere eine Kleinbrennkraftmaschine mit einem oder zwei oder drei Zylindern, umfassend einen erfindungsgemäßen Lader. Die erfindungsgemäße Brennkraftmaschine wird besonders bevorzugt in Kleinfahrzeugen, insbesondere Zweirädern oder Dreirädern oder Quads oder Schneemobilen oder dgl. verwendet. Der erfindungsgemäße Lader kann dabei sowohl bei direkteinspritzenden Brennkraftmaschinen als auch bei Saugrohreinspritzungen verwendet werden.

### Zeichnung

Nachfolgend werden unter Bezugnahme auf die begleitende Zeichnung Ausführungsbeispiele der Erfindung im Detail beschrieben. Gleiche bzw. funktional gleiche Teile sind dabei mit den gleichen Bezugszeichen bezeichnet. In der Zeichnung ist:
- Figur 1: eine schematische Ansicht einer Brennkraftmaschine mit einem erfindungsgemäßen Lader,
- Figur 2: eine schematische Ansicht des Laders von Figur 1 in einem ersten Betriebszustand,
- Figur 3: eine schematische Ansicht des Laders von Figur 2 in einem zweiten Betriebszustand, und
- Figur 4: eine schematische Ansicht eines Laders gemäß einem zweiten Ausführungsbeispiel.

### Bevorzugte Ausführungsformen der Erfindung

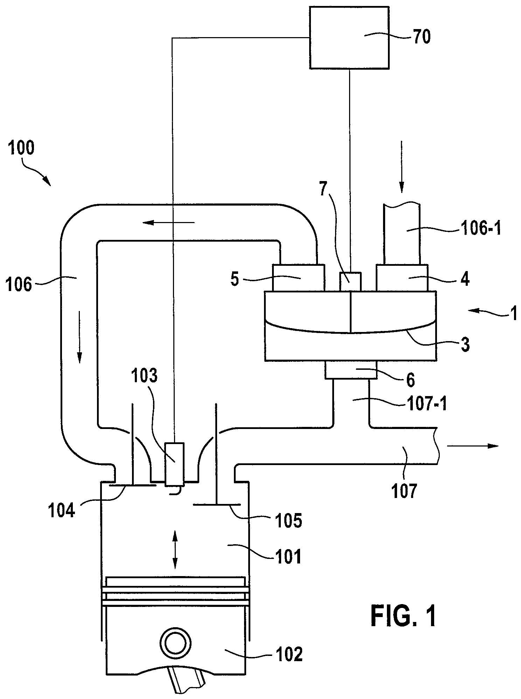

Nachfolgend wird unter Bezugnahme auf die Figuren 1 bis 3 ein Lader 1 gemäß einem ersten bevorzugten Ausführungsbeispiel der Erfindung im Detail beschrieben.

Figur 1 zeigt schematisch eine Brennkraftmaschine 100, welche eine Einzylindermaschine ist und einen Brennraum 101 aufweist, in welchem ein Kolben 102 hin- und herbewegbar ist. Das Bezugszeichen 103 bezeichnet eine Zündkerze. Am Brennraum 101 sind ferner ein Brennraumeinlassventil 104 und ein Brennraumauslassventil 105 angeordnet. Zum Brennraumeinlassventil 104 führt eine Frischluftleitung 106. Eine Abgasleitung 107 führt vom Brennraumauslassventil 105 fort. Eine Einspritzung von Kraftstoff kann dabei entweder in die Frischluftzuleitung 106 (Saugleitung) oder direkt in den Brennraum 101 erfolgen.

Der erfindungsgemäße Lader 1 ist nun in der Frischluftleitung 106, wie schematisch in Figur 1 gezeigt, angeordnet. Frischluft wird dabei über den Leitungsabschnitt 106-1 zum Lader 1 zugeführt. Hierbei ist an der Mündung ein als Rückschlagventil ausgebildetes Einlassventil 4 vorgesehen. Über ein Auslassventil 5 wird komprimierte Frischluft dann in die Frischluftleitung 106 und von dort in den Brennraum 101 geführt.

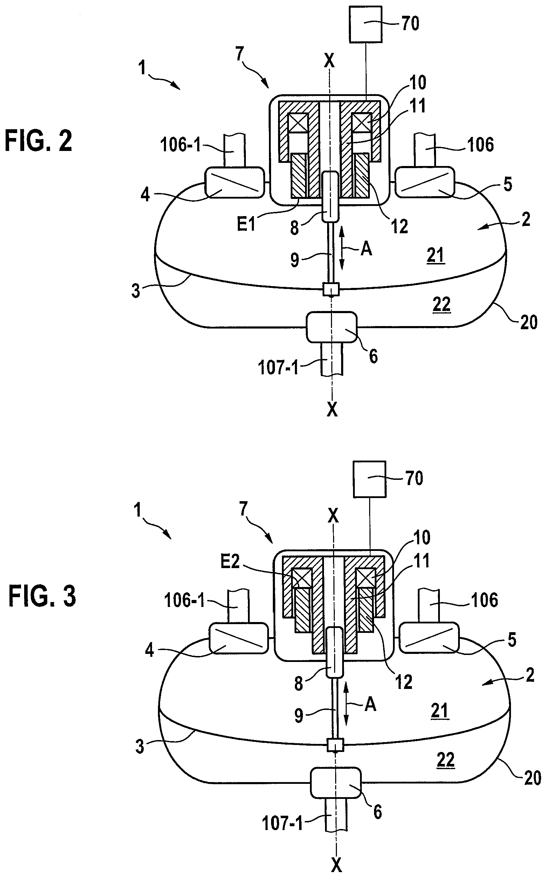

Der Lader 1 ist im Detail in den Figuren 2 und 3 dargestellt. Wie aus Figur 2 und 3 ersichtlich ist, umfasst der Lader 1 einen Laderraum 2, welcher in einem Gehäuse 20 einen Ansaugraum 21 und einen Abgasraum 22 aufweist. Der Ansaugraum 21 ist vom Abgasraum 22 gasdicht durch eine Membran 3 getrennt. Die Membran 3 ist eine Edelstahlmembran und ist entlang ihres Umfangs am inneren Wandbereich des Gehäuses 20 gasdicht fixiert.

Ferner ist ein elektrisch betreibbarer Aktuator 7 vorgesehen, welcher ein Elektrofederelement 71 mit einem Anker 8, einer Permanentmagnethülse 11 und einer Kurzschlusshülse 12 umfasst. Der Anker 8 ist über eine Stange 9 mit der Membran 3 verbunden.

Der Anker 8 ist dabei, wie aus den Figuren 2 und 3 ersichtlich ist, im inneren der Permanentmagnethülse 11 angeordnet. Der Anker ist dabei, wie durch den Doppelpfeil A angedeutet, in Axialrichtung X-X des Aktuators 7 bewegbar. Weiterhin ist am Außenumfang der Permanentmagnethülse 11 die Kurzschlusshülse 12 angeordnet. Die Kurzschlusshülse 12 ist ebenfalls in Axialrichtung X-X bewegbar.

Der Abgasraum 22 ist, wie aus den Figuren 1 bis 3 ersichtlich ist, über einen Abgasleitungsanschluss 6 und einen Leitungsabzweig 107-1 mit der Abgasleitung 107 verbunden.

Ferner ist eine Steuereinheit 70 vorgesehen, welche eingerichtet ist, den elektrisch betätigbaren Aktuator 7 anzusteuern. Die Steuereinheit 70 ist ferner, wie aus Figur 1 ersichtlich ist, mit der Zündkerze 103 verbunden.

Die Funktion des erfindungsgemäßen Laders 1 ist dabei wie folgt. Durch den Leitungsabzweig 107-1 steht der Abgasraum 22 des Laders 1 mit der Abgasleitung 107 in Verbindung. Dadurch werden Abgasdruckstöße über den Abgasraum 22 auf die Membran 3 übertragen. Hierdurch erfolgt eine Komprimierung der im Ansaugraum 21 angeordneten Frischluft, welche dann über das Auslassventil 5 in die Frischluftleitung 106 ausgeschoben wird. Durch die Eigenelastizität der Membran 3 stellt sich diese wieder selbsttätig in ihre Ausgangsposition zurück. Dabei wird Frischluft aus dem Leitungsabschnitt 106-1 über das Einlassventil in den Ansaugraum 21 angesaugt.

Um eine möglichst hohe Energieaufnahme des Schwingungssystems, welches die Membran 3 und den Anker 8 umfasst, sicherzustellen, sollte die Membran 3 möglichst in ihrer Resonanzfrequenz schwingen oder in einem Bereich nahe der Resonanzfrequenz, vorzugsweise +/- 20 % der Resonanzfrequenz, schwingen. Dabei kann nun erfindungsgemäß durch den Aktuator 7 eine Position der Kurzschlusshülse 12 verändert werden. Hierdurch wird eine Federsteifigkeit des Elektrofederelements 71 geändert.

Wie ein Vergleich zwischen den Figuren 2 und 3 zeigt, ist in Figur 2 die Kurzschlusshülse 2 an ihrem unteren Extrempunkt E1 nahe dem Laderraum 2 angeordnet und in Figur 3 an ihrem oberen Extrempunkt E2 nahe der Spule 10 angeordnet. In diesem Ausführungsbeispiel kann die Kurzschlusshülse 12 nur zwei Extrempositionen, nämlich eine untere Extremposition (Figur 2) und eine obere Extremposition (Figur 3) einnehmen. Durch die Positionsänderung der Kurzschlusshülse 12 wird ein Magnetfluss von der Permanentmagnethülse 11 über den Anker 8 verändert. Dadurch wird eine Bewegungsfähigkeit des Ankers 8 verändert, so dass eine Federsteifigkeit des Elektrofederelements 71 verändert wird. Dadurch kann bewusst eine Resonanzfrequenz der Membran 3 durch Änderung einer Position der Kurzschlusshülse 12 und somit einer Bewegungsfähigkeit des Ankers 8 eingestellt werden.

Die Steuereinheit 70 ist nun derart eingerichtet, dass, basierend auf einer Zündfrequenz, welche über die Verbindung mit der Zündkerze 103 leicht erfassbar ist, auch eine entsprechende Resonanzfrequenz der Membran 3 eingestellt wird. Figur 2 zeigt dabei eine Einstellung derart, dass bei einer minimalen Drehzahl der Brennkraftmaschine das Elektrofederelement 71 eine sehr geringe Federsteifigkeit und somit die Membran 3 eine kleine Resonanzfrequenz aufweist. Ein Magnetfeld wird dabei durch die Kurzschlusshülse 12 entsprechend geschwächt. In Figur 3 ist eine Einstellung des Aktuators 7 bei einer maximalen Drehzahl der Brennkraftmaschine dargestellt. Hierbei weist das Elektrofederelement 71 eine höchste Federsteifigkeit und die Membran 3 eine hohe Resonanzfrequenz auf.

Somit kann auf einfache Weise durch Änderung einer Position der Kurzschlusshülse 12 mehr oder weniger Magnetfluss durch den Anker 8 eingestellt werden, wodurch eine Federwirkung des Elektrofederelements 71 verändert wird. Der Anker 8 ist ebenfalls als Permanentmagnet ausgebildet.

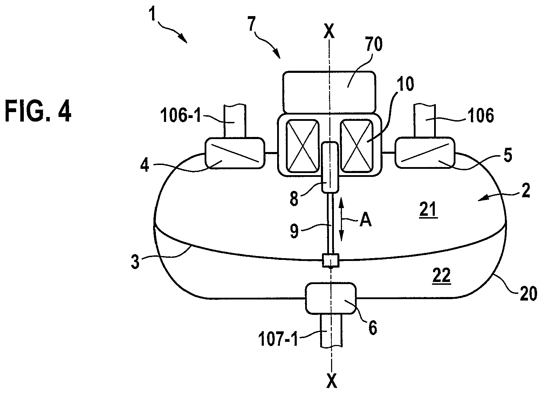

Figur 4 zeigt einen Lader 1 gemäß einem zweiten Ausführungsbeispiel der Erfindung. Bei diesem Ausführungsbeispiel ist ein permanentmagnetische Anker 8 im inneren der Spule 10 angeordnet. Somit kann durch Bestromung der Spule 10, welche über die Steuereinheit 70 gesteuert wird, eine Federsteifigkeit des Elektrofederelements 71 geändert werden. Der Anker 8 ist wieder über die Stange 9 mit der Membran 3 verbunden. Somit kann auch eine Resonanzfrequenz der Membran 3 variabel verändert werden. Abhängig von der Höhe der Bestromung wird somit eine unterschiedliche Federsteifigkeit des Elektrofederelements 71 und somit unterschiedliche Resonanzfrequenzen der Membran 3 ermöglicht. Dabei kann eine sehr feinfühlige Einstellung der Resonanzfrequenz der Membran erreicht werden. Die Resonanzfrequenz der Membran wird bevorzugt in Abhängigkeit einer Zündfrequenz bestimmt. Alternativ oder zusätzlich wird auch eine Drehzahl der Brennkraftmaschine ermittelt und zur Bestimmung der Resonanzfrequenz der Membran verwendet.

Hierbei kann beispielsweise eine Ermittlung der Drehzahl mittels eines Kurbelwellensensors erfolgen, welcher üblicherweise sowieso bei Brennkraftmaschinen vorhanden ist. Dadurch sind keine zusätzlichen Bauteile zur Ermittlung der Drehzahl notwendig. Basierend auf der Drehzahl ist die Steuereinheit 70 dann eingerichtet, eine Bestromung der Spule 10 durchzuführen.

Weiterhin ist es auch möglich, dass die Spule 10 dauerbestromt wird und eine zyklische Bestromung der Dauerbestromung überlagert wird, um die Resonanzfrequenz der Membran 3 zu ändern.

Zu den beiden Ausführungsbeispielen sei nochmals angemerkt, dass die Steuereinheit 70 derart eingerichtet ist, dass im Betrieb die Membran 3 möglichst immer in oder nahe einer Resonanzfrequenz betreibbar ist. Dadurch ist eine Energieaufnahme über die Membran am größten, so dass der Abgasstoß zur Verdichtung der Frischluft im Ansaugraum 21 optimal genutzt werden kann. Ferner sei angemerkt, dass statt der als Rückschlagventile ausgebildeten Einlassventile 4 und Auslassventile 5 auch selbstverständlich gesteuerte Ventile verwendbar sind. Allerdings werden dadurch die Kosten des Laders 1 erhöht.

## Patentansprüche

1. Lader einer Brennkraftmaschine, umfassend:
- einen Laderraum (2),
- eine Membran (3), welche im Laderraum (2) angeordnet ist und den Laderraum in einen Ansaugraum (21) und einen Abgasraum (22) unterteilt,
- wobei am Ansaugraum (21) ein Einlassventil (4) und ein Auslassventil (5) angeordnet ist,
- wobei der Abgasraum (22) mit einer Abgasleitung (107) verbunden ist, **gekennzeichnet durch** einen elektrisch betätigbaren Aktuator (7), welcher mit der Membran (3) verbunden ist, um eine Resonanzfrequenz der Membran (3) zu ändern.

2. Lader nach Anspruch 1, **dadurch gekennzeichnet, dass** der Aktuator (7) ein elektrisch betätigbares Elektrofederelement (71) umfasst, dessen Federsteifigkeit veränderbar ist.

3. Lader nach Anspruch 2, **dadurch gekennzeichnet, dass** das elektrisch betätigbare Elektrofederelement (71) einen Anker (8) und eine Spule (10) umfasst, wobei der Anker (8) mit der Membran (3) verbunden ist.

4. Lader nach Anspruch 3, **dadurch gekennzeichnet, dass** das elektrisch betätigbare Elektrofederelement (71) ferner ein ortsfestes Permanentmagnetelement (11) und ein in Axialrichtung (X-X) des Aktuators (7) verschiebbares Kurzschlusselement (12) zur Änderung eines Magnetflusses durch den Anker umfasst, wobei der Aktuator (7) derart eingerichtet ist, dass bei einer Bestromung der Spule (10) eine Position des Kurzschlusselements (12) verändert wird, um eine Federsteifigkeit des elektrisch betätigbaren Federelements (71) zu ändern.

5. Lader nach Anspruch 4, **dadurch gekennzeichnet, dass** der Aktuator (7) das Kurzschlusselement (12) nur zwischen einer ersten Extremposition und einer zweiten Extremposition verschiebt.

6. Lader nach einem der vorhergehenden Ansprüche ferner umfassend eine Steuereinheit (70) zur Steuerung des Aktuators (7), wobei die Steuereinheit (70) eingerichtet ist, die Membran (3) mit ihrer Resonanzfrequenz schwingen zu lassen oder in einem Bereich +/- 20% der Resonanzfrequenz, insbesondere +/- 10% der Resonanzfrequenz, schwingen zu lassen.

7. Lader nach Anspruch 3 und 6, **dadurch gekennzeichnet, dass** die Steuereinheit (70) eingerichtet ist, die Spule (10) konstant zu bestromen, oder die Steuereinheit (70) eingerichtet ist, die Spule (10) zyklisch zu bestromen.

8. Lader nach Anspruch 2. 3 und 6, **dadurch gekennzeichnet, dass** die Steuereinheit (70) eingerichtet ist, die Spule (10) konstant zu bestromen und der Konstantbestromung eine zyklische Bestromung zu überlagern.

9. Lader nach Anspruch 3 und 6, **dadurch gekennzeichnet, dass** die Steuereinheit (70) eingerichtet, die Spule (10) synchron zu einem Brennkraftmaschinenzyklus zu bestromen, um eine Schwingungsamplitude der Membran (3) ohne Beeinflussung der Resonanzfrequenz zu ändern, insbesondere zu erhöhen.

10. Lader nach Anspruch 3 und einem der Ansprüche 6 bis 9, **dadurch gekennzeichnet, dass** die Steuereinheit (70) eingerichtet ist, den Aktuator (7) derart zu betätigen, dass die Bestromung der Spule (10), basierend auf einer Zündfrequenz der Brennkraftmaschine, erfolgt.

11. Lader nach Anspruch 3 und einem der Ansprüche 6 bis 10, **dadurch gekennzeichnet, dass** die Steuereinheit (70) eingerichtet ist, den Aktuator (7) derart zu betätigen, dass die Bestromung der Spule, basierend auf einer Drehzahl der Brennkraftmaschine, erfolgt.

12. Lader nach einem der vorhergehenden Ansprüche, **dadurch gekennzeichnet, dass** das Einlassventil (4) und/oder das Auslassventil (5) ein Rückschlagventil ist.

13. Lader nach einem der vorhergehenden Ansprüche, **dadurch gekennzeichnet, dass** die Membran (3) eine Edelstahlmembran ist.

## Claims

1. Supercharger of an internal combustion engine, comprising:
- a supercharger chamber (2),
- a diaphragm (3) which is arranged in the supercharger chamber (2) and subdivides the supercharger chamber into an intake chamber (21) and an exhaust gas chamber (22),
- wherein an inlet valve (4) and an outlet valve (5) are arranged on the intake chamber (21),
- wherein the exhaust gas chamber (22) is connected to an exhaust gas line (107), **characterized by** an electrically operable actuator (7) which is connected to the diaphragm (3) in order to change a resonant frequency of the diaphragm (3).

2. Supercharger according to Claim 1, **characterized in that** the actuator (7) comprises an electrically operable electrical spring element (71), it being possible to vary the spring stiffness of said electrical spring element.

3. Supercharger according to Claim 2, **characterized in that** the electrically operable electrical spring element (71) comprises an armature (8) and a coil (10), wherein the armature (8) is connected to the diaphragm (3).

4. Supercharger according to Claim 3, **characterized in that** the electrically operable electrical spring element (71) further comprises a stationary permanent-magnet element (11) and a short-circuiting element (12), which can be displaced in the axial direction (X-X) of the actuator (7), for the purpose of changing a magnetic flux through the armature, wherein the actuator (7) is designed in such a way that, when current is applied to the coil (10), a position of the short-circuiting element (12) is varied, in order to change a spring stiffness of the electrically operable spring element (71).

5. Supercharger according to Claim 4, **characterized in that** the actuator (7) displaces the short-circuiting element (12) only between a first extreme position and a second extreme position.

6. Supercharger according to either of the preceding claims, further comprising a control unit (70) for controlling the actuator (7), wherein the control unit (70) is designed to allow the diaphragm (3) to oscillate at its resonant frequency or to allow said diaphragm to oscillate in a range of +/-20% of the resonant frequency, in particular +/-10% of the resonant frequency.

7. Supercharger according to Claim 3 and 6, **characterized in that** the control unit (70) is designed to apply current constantly to the coil (10), or the control unit (70) is designed to apply current cyclically to the coil (10).

8. Supercharger according to Claim 3 and 6, **characterized in that** the control unit (70) is designed to apply current constantly to the coil (10) and to superimpose a cyclical current application operation on the constant current application operation.

9. Supercharger according to Claim 3 and 6, **characterized in that** the control unit (70) is designed to apply current to the coil (10) synchronously to an internal combustion engine cycle in order to change, in particular to increase, an oscillation amplitude of the diaphragm (3) without influencing the resonant frequency.

10. Supercharger according to Claim 3 and one of Claims 6 to 9, **characterized in that** the control unit (70) is designed to operate the actuator (7) in such a way that current is applied to the coil (10) based on an ignition frequency of the internal combustion engine.

11. Supercharger according to Claim 3 and one of Claims 6 to 10, **characterized in that** the control unit (70) is designed to operate the actuator (7) in such a way that current is applied to the coil based on a rotation speed of the internal combustion engine.

12. Supercharger according to one of the preceding claims, **characterized in that** the inlet valve (4) and/or the outlet valve (5) are/is a non-return valve.

13. Supercharger according to one of the preceding claims, **characterized in that** the diaphragm (3) is a stainless steel diaphragm.

## Revendications

1. Turbocompresseur d'un moteur à combustion interne, le turbocompresseur comprenant :
- une chambre de turbocompresseur (2),
- une membrane (3) qui est disposée dans la chambre de turbocompresseur (2) et qui divise la chambre de turbocompresseur en une chambre d'aspiration (21) et une chambre de gaz d'échappement (22),
- une soupape d'admission (4) et une soupape de sortie (5) étant disposées au niveau de la chambre d'aspiration (21),
- la chambre de gaz d'échappement (22) étant reliée à un conduit de gaz d'échappement (107),
**caractérisé par**
un actionneur (7) qui peut être actionné électriquement et qui est relié à la membrane (3) pour modifier la fréquence de résonance de la membrane (3).

2. Turbocompresseur selon la revendication 1, **caractérisé en ce que** l'actionneur (7) comprend un élément à ressort électrique (71) qui peut être actionné électriquement et dont la raideur est variable.

3. Turbocompresseur selon la revendication 2, **caractérisé en ce que**
l'élément à ressort électrique (71) pouvant être actionné électriquement comprend un induit (8) et une bobine (10), l'induit (8) étant relié à la membrane (3) .

4. Turbocompresseur selon la revendication 3, **caractérisé en ce que** l'élément à ressort électrique (71) pouvant être actionné électriquement comprend en outre un élément à aimant permanent fixe (11) et un élément de court-circuit (12) déplaçable dans la direction axiale (X-X) de l'actionneur (7) et destiné à modifier un flux magnétique à travers l'induit, l'actionneur (7) étant adapté de manière à modifier, lorsque la bobine (10) est alimentée en courant, une position de l'élément de court-circuit (12) pour modifier la rigidité de l'élément à ressort (71) pouvant être actionné électriquement.

5. Turbocompresseur selon la revendication 4, **caractérisé en ce que** l'actionneur (7) ne fait coulisser l'élément de court-circuit (12) qu'entre une première position extrême et une deuxième position extrême.

6. Turbocompresseur selon l'une des revendications précédentes, comprenant en outre une unité de commande (70) destinée à commander l'actionneur (7), l'unité de commande (70) étant adaptée pour faire vibrer la membrane (3) à sa fréquence de résonance ou dans une plage de +/- 20 % de la fréquence de résonance, en particulier +/- 10 % de la fréquence de résonance.

7. Turbocompresseur selon les revendications 3 et 6, **caractérisé en ce que** l'unité de commande (70) est adaptée pour alimenter la bobine (10) en courant de manière constante, ou l'unité de commande (70) est adaptée pour alimenter la bobine (10) en courant de manière cyclique.

8. Turbocompresseur selon les revendications 3 et 6, **caractérisé en ce que** l'unité de commande (70) est adaptée pour alimenter la bobine (10) en courant de manière constante et pour superposer une alimentation en courant cyclique à l'alimentation en courant constante.

9. Turbocompresseur selon les revendications 3 et 6, **caractérisé en ce que** l'unité de commande (70) est adaptée pour alimenter la bobine (10) en courant de manière synchrone pour obtenir un cycle de moteur à combustion interne afin de modifier, en particulier d'augmenter, une amplitude de vibration de la membrane (3) sans influer sur la fréquence de résonance.

10. Turbocompresseur selon la revendication 3 et l'une des revendications 6 à 9, **caractérisé en ce que** l'unité de commande (70) est adaptée pour actionner l'actionneur (7) de sorte que l'alimentation de la bobine (10) en courant soit effectuée sur la base d'une fréquence d'allumage du moteur à combustion interne.

11. Turbocompresseur selon la revendication 3 et l'une des revendications 6 à 10, **caractérisé en ce que** l'unité de commande (70) est adaptée pour actionner l'actionneur (7) de sorte que l'alimentation de la bobine en courant soit effectuée sur la base d'une vitesse de rotation du moteur à combustion interne.

12. Turbocompresseur selon l'une des revendications précédentes, **caractérisé en ce que** la soupape d'admission (4) et/ou la soupape de sortie (5) sont chacune une soupape anti-retour.

13. Turbocompresseur selon l'une des revendications précédentes, **caractérisé en ce que** la membrane (3) est une membrane en acier fin.
